# EUROPÄISCHE PATENTSCHRIFT

(11) **EP 2 144 968 B1**
(45) Veröffentlichungstag und Bekanntmachung des Hinweises auf die Patenterteilung: **06.06.2012**
(21) Anmeldenummer: 08736442.8
(22) Anmeldetag: 22.04.2008
(51) Int. Cl.: C09C 1/30, C09C 3/12

(54) **DISPERGIERBARE NANOPARTIKEL**
DISPERSIBLE NANOPARTICLES
NANOPARTICULES DISPERSIBLES

(30) Priorität: 04.05.2007 DE 102007021002
(43) Veröffentlichungstag der Anmeldung: 20.01.2010
(73) Patentinhaber: Wacker Chemie AG, 81737 München (DE)
(72) Erfinder: BRIEHN, Christoph, 84367 Zeilarn (DE); BAUMANN, Martina, 82054 Sauerlach (DE); KINZLER, Carolin, 82239 Alling (DE)
(74) Vertreter: Gössmann, Christoph Tassilo
(86) Internationale Anmeldenummer: PCT/EP2008/054833
(87) Internationale Veröffentlichungsnummer: WO 2008/135379

(56) Entgegenhaltungen:
- DE-A1-102004 057 997
- BAGWE R P ET AL: "SURFACE MODIFICATION OF SILICA NANOPARTICLES TO REDUCE AGGREGATION AND NONSPECIFIC BINDING" LANGMUIR, ACS, WASHINGTON, DC, US, Bd. 22, Nr. 9, 31. März 2006 (2006-03-31), Seiten 4357-4362, XP009070408 ISSN: 0743-7463

## Beschreibung

Die Erfindung betrifft pulverförmige Partikel, ihre Herstellung und deren Dispersion in wässrigen und organischen Medien.

Partikel - insbesondere Nanopartikel - enthaltende Kompositmaterialien sind Stand der Technik. Entsprechende Beschichtungen aus Kompositmaterialien sind beispielsweise in EP 1 249 470, WO 03/16370, US 20030194550 oder US 20030162015 beschrieben. Die Partikel führen dabei zu einer Verbesserung der Eigenschaften der entsprechenden Beschichtungen, insbesondere hinsichtlich ihrer Kratzfestigkeit sowie gegebenenfalls auch ihrer Chemikalienbeständigkeit.

Ein häufig auftretendes Problem beim Einsatz der - in der Regel anorganischen - Partikel in organischen Matrixsystemen besteht in einer meist unzureichenden Verträglichkeit von Partikel und Matrix. Dies kann dazu führen, dass sich die Teilchen nicht hinreichend gut in der Matrix dispergieren lassen. Zudem können sich selbst gut dispergierte Partikel bei längeren Stand- oder Lagerzeiten absetzen, wobei sich gegebenenfalls größere Aggregate bzw. Agglomerate ausbilden, die sich auch durch einen Energieeintrag nicht bzw. nur schlecht in die ursprünglichen Teilchen auftrennen lassen. Die Verarbeitung von solchen inhomogenen Systemen ist in jedem Falle äußerst schwierig, oftmals sogar unmöglich.

Dispersionen von Nanopartikeln, insbesondere wässrige Dispersionen finden beispielsweise Verwendung als Rieselhilfsmittel, zur Ladungssteuerung in Tonern und Entwicklern, in Pulverlacken, als Schleifkorn in Polierprozessen, als rheologisches Additiv für wasserbasierte Kleb- und Dichtstoffe und zur Modifizierung der Oberflächeneigenschaften verschiedener Substrate wie beispielsweise Textilfasern oder Papier.

Die Stabilität wässriger Dispersionen von Nanopartikeln wird maßgeblich durch den Betrag der Oberflächenladungsdichte des dispergierten Partikels bestimmt. Mit zunehmender Oberflächenladungsdichte steigt die Stabilität der Dispersion gegenüber Vergelung und Sedimentation an.
Das Vorzeichen, der Betrag und die Dichte der Oberflächenladung partikulärer Metalloxide werden maßgeblich durch die chemische Struktur der Partikeloberfläche bestimmt. Im Falle von unmodifizierten Metalloxiden wie Siliciumdioxid, Aluminiumoxid oder Titandioxid sind die an der Oberfläche vorliegenden Hydroxylgruppen die ladungsbestimmenden Gruppen. Aufgrund der Säure-Basen-Eigenschaften dieser Hydroxylgruppen ist die Oberflächenladung der Partikel abhängig vom pH-Wert des umgebenden Mediums: Ein niedriger pH-Wert führt durch Protonierung der Hydroxylgruppe zu einer positiven Oberflächenladung, ein hoher pH-Wert durch Deprotonierung der Hydroxylgruppe zu einer negativen Oberflächenladung. Durch die pH-Wert-Abhängigkeit sind die Oberflächenladungen stark von den Umgebungsbedingungen abhängig. Diese Abhängigkeit der Oberflächenladung vom pH-Wert kann beispielsweise die Stabilität wässriger Dispersionen besagter partikulärer Metalloxide negativ beeinflussen. Aus diesem Grund werden Dispersionen enthaltend Nanopartikel benötigt, deren Oberflächenladung über einen weiten pH-Bereich eine Stabilität der Dispersion gewährleistet.

Günstig ist daher der Einsatz von Partikeln (bzw. entsprechender Dispersionen), die auf ihrer Oberfläche über organische Gruppen verfügen, welche zu einer besseren Verträglichkeit der Partikel mit der umgebenden Matrix führen bzw, in einer elektrostatischen und/oder sterischen Stabilisierung der Dispersion resultieren und somit eine unerwünschte Agglomeration bzw. Aggregation der Partikel unterdrücken.

Nach dem Stand der Technik werden oberflächenmodifizierte Partikel hergestellt, indem man Nanopartikel, die über freie Silanol- (SiOH) oder Metallhydroxidfunktionen verfügen, mit Alkoxysilanen oder deren Hydrolyse- und Kondensationsprodukten umsetzt, die unreaktive Gruppen, wie z.B. Alkyl- oder Arylreste, oder reaktive organische Funktionen, wie z.B. Vinyl, (Meth)acryl, Carbinol, Amin etc., enthalten.

Nachteilig ist die trotz modifizierter Oberfläche unzureichende Stabilität der im Stand der Technik für die Herstellung von Kompositmaterialien oder Dispersionen eingesetzten modifizierten Nanopartikel. Diese unzureichende Stabilität der Partikel bzw. der entsprechenden Dispersionen tritt zum einen bei der Verarbeitung der Partikel, insbesondere beim Aufkonzentrieren der Partikeldispersionen bzw. einem Lösungsmittelaustausch, zum anderen bei der Lagerung der Partikeldispersionen zu Tage. Anzeichen für eine mangelnde Stabilität der Partikel sind ein - häufig bis zur Vergelung fortschreitender - Viskositätsanstieg oder die Sedimentation der Partikel. Zudem lassen sich die beschriebenen Nanopartikel aufgrund der hohen Agglomerations- bzw. Aggregationsneigung nicht als redispergierbare Feststoffe isolieren. Die nach dem Stand der Technik herstellbaren Partikel fallen bei Isolierung, beispielsweise durch Sprühtrocknung, als Partikelagglomerate bzw. -aggregate an, die sich - insbesondere nach Lagerung bei erhöhter Temperatur - auch unter Energieeintrag, beispielsweise mittels einer Perlmühle oder durch Ultraschallbehandlung, nicht unter Erreichung der ursprünglichen Primärpartikelgröße redispergieren lassen. Dies wäre aber im Hinblick auf die Lagerung, den Transport und insbesondere für eine Verarbeitung der Pulver z.B. in Extrusionsprozessen besonders wünschenswert.

In der DE 102 97 612 T5 werden in Wasser redispergierbare Pulver beschrieben (unter Redispergierbarkeit wird hierbei verstanden, dass der Quotient aus der mittleren Partikelgröße der redispergierten Partikel und der mittleren Partikelgröße der zur Herstellung eingesetzten Solpartikel zwischen 1 und 2 liegt), die erhalten werden durch Behandeln einer wässrigen Dispersion eines anorganischen Sols mit einem Alkylalkoxysilan bzw. einem Aminoalkylalkoxysilan und dem sich anschließenden Trocknen der Dispersionen. Die Redispergierung der Aminoalkylsilan-modifizierten Partikel auf die Größe der ursprünglich eingesetzten anorganischen Solpartikel gelingt durch Protonierung der basischen Aminogruppen und damit durch elektrostatische Abstoßung der resultierenden ammoniumfunktionellen Partikel.
Nachteilig an den in der DE 102 97 612 T5 beanspruchten Partikeln ist, dass die Amino-modifizierten Partikel mit einer Vielzahl von Matrixsystemen unverträglich sind. Als Folge beobachtet man im Kompositmaterial anstelle einer gewünschten homogenen Verteilung isolierter Nanopartikel große Partikelagglomerate, die häufig in einer Verschlechterung der mechanischen Eigenschaften resultieren. Zudem ist ein Nachteil der beschriebenen Partikel, dass für ihre Dispergierung in Wasser der Zusatz starker Säuren erforderlich ist.

In der WO 2004/000916 wird die Herstellung wässriger Dispersionen von Nanopartikeln durch Umsetzung von Metalloxiden mit polymeren anionischen Dispergiermitteln beschrieben. Nachteilig an diesem Herstellverfahren ist die Verwendung von Dispergiermitteln, die aufgrund mangelnder Reaktivität zu keiner permanenten Anbindung an den Partikel befähigt sind. Damit ist die Oberflächenladung von der Lage des Adsorptions-Desorptions-Gleichgewichts abhängig. In einem wässrigen Medium ist eine teilweise oder vollständige Desorption des Dispergiermittels zu erwarten, was eine sich im Laufe der Zeit verringernde Lagerstabilität der entsprechenden Dispersionen zur Folge hat.

DE 102004057997) beschreibt positiv geladene Agglomerate, die nicht redispergierbar sind.

Die in Bagwe R P et al: "Surface Modification of Silica Nanoparticles to Reduce Aggregation and Nanospecific Binding. Langmuir, ACS, Washington, DC, US, Bd. 22, Nr 9, 31 März 2006, Seiten 4357-4362 beschreibt ) beschriebenen Partikel werden aus einer W/O Emulsion unter Hinzugabe von TEOS und eines Dispergiermittels Triton-X-100 (Emulgator) hergestellt. Es werden keine redispergierbaren Partikel erhalten, sondern Agglomerate, die nicht dispergierbar sind.

Aufgabe der Erfindung ist es den Stand der Technik zu verbessern, insbesondere die Entwicklung von Partikeln bzw. deren Dispersionen, die die Nachteile des Standes der Technik überwinden.

Gegenstand der Erfindung sind redispergierbare pulverförmige Partikel (P), die auf der Oberfläche Gruppen der allgemeinen Formel [1],

-O₁₊ₙ-SiR¹₂₋ₙ-B [1],

aufweisen, wobei der mittlere Durchmesser der Partikel (P) nach der Dispergierung in Wasser mit einem pH-Bereich von 1 bis 12 kleiner oder gleich 200 nm ist und als mittlerer hydrodynamischer Äquivalenzdurchmesser in Form des Z-Average durch Photonenkorrelationsspektroskopie bestimmt wird,
wobei
- **R¹**: einen gegebenenfalls substituierten aliphatischen oder aromatischen Kohlenwasserstoffrest mit 1-12 Kohlenstoffatomen,
- **B**: einen gegebenenfalls substituierten aliphatischen oder aromatischen Kohlenwasserstoffrest enthaltend mindestens eine organische Säurefunktion bzw. deren Salze bedeutet und
- **n**: die Werte 0, 1 oder 2 annimmt. und die pulverförmigen Partikel (P) eine Restfeuchte von kleiner 10 Gew.-% aufweist.
- **B**: bedeutet bevorzugt einen gegebenenfalls substituierten Kohlenwasserstoffrest enthaltend mindestens eine Carbonsäure-[-C(O)OH], Phosphonsäure- [-P(O)(OH)(OR²), -O-P(O)(R²)(OR²)] oder Sulfonsäurefunktion [-S(O)₂(OH)] bzw. deren Salze, wobei
- R²: einen gegebenenfalls substituierten aliphatischen oder aromatischen Kohlenwasserstoffrest darstellt. n nimmt bevorzugt die Werte 1 und 2 an. R¹ stellt bevorzugt eine Methyl-, Ethyl- oder Phenylgruppe dar.

Der mittlere Durchmesser der Partikel (P) - gemessen als mittlerer hydrodynamischer Äquivalenzdurchmesser in Form des Z-Average durch Photonenkorrelationsspektroskopie - beträgt dispergiert in einem flüssigen Medium vorzugsweise höchstens 200 nm, bevorzugt höchstens 100 nm, besonders bevorzugt höchstens 50 nm. Dabei können die Partikel (P) als Aggregate (Definition nach DIN 53206) oder Agglomerate (Definition nach DIN 53206) entsprechend kleinerer Primärpartikel vorliegen.

In einer Ausführungsform der Erfindung weisen die Partikel (P) neben den Funktionen der allgemeinen Formel [1] auch noch mindestens eine organofunktionelle Gruppe (F) auf, mit der beispielsweise eine kovalente-Anbindung der Partikel (P) an eine entsprechend funktionalisierte (polymere) Matrix möglich ist. Beispiele für organofunktionelle Gruppen (F) sind Aminogruppen, Epoxidgruppen, Acrylatogruppen, Methacrylatogruppen und Hydroxygruppen.

Die pulverförmigen Partikel (P) weisen vorzugsweise eine Restfeuchte von kleiner 10 Gew.-%, bevorzugt kleiner 5 Gew.-% und besonders bevorzugt kleiner 2 Gew.-% auf.

Ein weiterer Gegenstand ist ein Verfahren zur Herstellung der redispergierbaren pulverförmigen Partikel (P) nach einem zweistufigen Verfahren, wobei
(a) in einer ersten Verfahrensstufe Partikel (P1) in einer ersten Verfahrensstufe Partikel (P1) als kolloidale Silicium- oder Metalloxide eingesetzt werden, die als Dispersion der entsprechenden Oxidteilchen von Submikrongröße in einem wässrigen Lösungsmittel vorliegen mit
   mindestens einem Silan (S) der allgemeinen Formel [2] oder [3],

   X₁₊ₙSiR¹₂₋ₙ-B [2],

   X₁₊ₙSiR¹₂₋ₙ-C [3],

   bzw. der daraus abgeleiteten Hydrolyse- und Kondensationsprodukte oder einer Mischung bestehend aus dem Silan (S) und den daraus abgeleiteten Hydrolyse- und Kondensationsprodukten umgesetzt werden, wobei die Gruppe C der allgemeinen Formel [3] im Zuge der Herstellung der Partikel (P) in die Gruppe B überführt wird und
(b) in einer zweiten Verfahrensstufe die Partikel (P) als Pulver isoliert werden, wobei der mittlere Durchmesser der Partikel (P) nach der Dispergierung in Wasser im pH-Bereich von 1 bis 12 mit einer maximalen Größe von 200 nm dem 0,5- bis 20-fachen des mittleren Durchmessers der Partikel vor der Isolierung als Pulver entspricht und der mittlere Durchmesser der Partikel (P) als mittlerer hydrodynamischer Äquivalenzdurchmesser in Form des Z-Average durch Photonenkorrelationsspektroskopie bestimmt wird,
wobei
- **X**: ein Halogen, eine Hydroxy- oder Alkoxygruppe, ein Carboxylat, ein Enolat oder eine Siloxy-Gruppe -O-Si≡,
- **C**: einen funktionellen Kohlenwasserstoffrest darstellt, der durch Hydrolyse in die Gruppe **B** überführt werden kann und
- **B, R¹**: und n die bei der allgemeinen Formel [1] angegebenen Bedeutungen aufweisen.
- **X**: stellt bevorzugt Chlor, Hydroxy, Methoxy oder Ethoxy dar. Die Reste **C** bedeuten bevorzugt Kohlenwasserstoffreste, die als funktionelle Gruppen Carbonsäurechloride, Carbonsäureanhydride, Carbonsäureester, Phosphonsäurechloride, Phosphonsäureanhydride, Phosphonsäureester, Sulfonsäurechloride, Sulfonsäureanhydride oder Sulfonsäureester enthalten.

Die Anbindung der Silane (S) an die Partikel (P1) erfolgt durch Substitution oder Kondensation nach erfolgter Hydrolyse oder aber durch Äquilibrierung. Die Vorgehensweise für die Substitution, Kondensation bzw. Äquilibrierung sowie die für diese Reaktionen benötigten Katalysatoren sind dem Fachmann geläufig und in der Literatur vielfach beschrieben.

Als Silane (S) eignen sich sämtliche Silane, die gegenüber den Oberflächenfunktionen des Partikels (P1) reaktiv sind, und über eine Gruppe **B** oder **C** verfügen. Kommt ein Silan (S) enthaltend eine Gruppe **C** zum Einsatz, so wird die Gruppe **C** im Zuge des Herstellungsprozesses durch Hydrolyse, d.h. durch Reaktion der Gruppe **C** mit Wasser oder einem Hydroxidion, in eine Gruppe **B** umgewandelt. Typischerweise erfolgt die Umwandlung nach Anbindung des Silans bzw. dessen Hydrolyse- und Kondensationsprodukten an das Partikel (P1). Beispiele für Reaktionen, die eine Umwandlung der Gruppe **C** in die Gruppe **B** ermöglichen, sind die Hydrolyse eines Säurechlorids oder eines Anhydrids sowie die Verseifung eines Esters.

In einer besonders bevorzugten Ausführungsform der Erfindung weisen die zur Modifizierung der Partikel (P1) eingesetzten Silane (S) eine Struktur der allgemeinen Formeln [4]-[8], 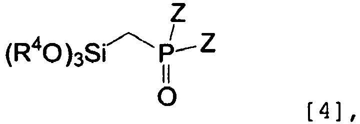 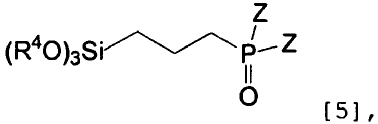 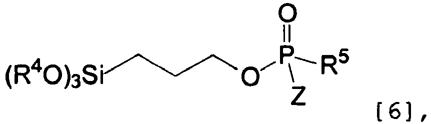 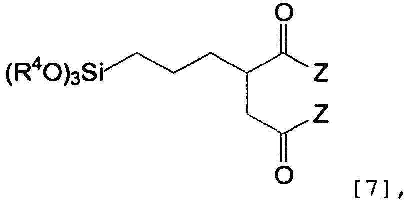 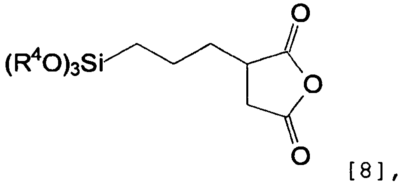 auf, wobei
- **R⁴**: Wasserstoff, einen gegebenenfalls substituierten aliphatischen oder aromatischen Kohlenwasserstoff mit 1-6 Kohlenstoffatomen,
- **R⁵**: einen gegebenenfalls substituierten aliphatischen oder aromatischen Kohlenwasserstoff mit 1-6 Kohlenstoffatomen,
- **R⁶**: einen gegebenenfalls substituierten aliphatischen oder aromatischen Kohlenwasserstoff mit 1-6 Kohlenstoffatomen,
- Z: OH, O**R⁶**, ein Halogenatom oder einen Rest O**W** und
- **W**: ein Metallkation oder ein Ammoniumion darstellt.

**R⁴** stellt bevorzugt Wasserstoff, einen Methyl oder Ethylrest dar. **R⁵** und **R⁶** bedeuten bevorzugt Methyl, Ethyl oder Isopropyl, **Z** bevorzugt OH, OCH₃, OC₂H₅ oder Chlor und **W** bevorzugt ein Natrium-, Kalium- oder Ammoniumion.

Die zur Modifizierung der Partikel (P1) eingesetzten Silane (S) bzw. deren Hydrolyse- oder Kondensationsprodukte werden dabei vorzugsweise in einer Menge größer 50 ppm , bevorzugt größer 1 Gew.-%, besonders bevorzugt größer 5 Gew.-%, jeweils bezogen auf die Partikel (P1) eingesetzt.

Bei der Herstellung der Partikel (P) aus Partikeln (P1) können neben den Silanen (S) bzw. deren Hydrolyse- und Kondensationsprodukten zusätzlich andere Silane (S1), Silazane (S2) oder Siloxane (S3) eingesetzt werden. Bevorzugt sind die Silane (S1), Silazane (S2) oder Siloxane (S3) gegenüber den Funktionen der Oberfläche des Partikels (P1) reaktiv. Die Silane (S1) und Siloxane (S3) verfügen dabei entweder über Silanolgruppen oder über hydrolysierbare Silylfunktionen, wobei letztere bevorzugt werden. Dabei können die Silane (S1), Silazane (S2) und Siloxane (S3) über organische Funktionen (F) verfügen, die gegenüber einem Bindemittel reaktiv sind, es können aber auch Silane (S1), Silazane (S2) und Siloxane (S3) ohne Organofunktionen verwendet werden. Dabei können die Silane und Siloxane (S) als Mischung mit den Silanen (S1), Silazanen (S2) oder Siloxanen (S3) eingesetzt werden. Daneben können die Partikel auch sukzessive mit den unterschiedlichen Silantypen funktionalisiert werden.

Bevorzugt liegt der gewichtsmäßige Anteil der Silane (S1), Silazane (S2), und Siloxane (S3) an der Gesamtmenge, die aus den Silanen (S) und (S1), Silazanen (S2) und Siloxanen (S3) gebildet wird, bei weniger als 50 Gew.-%, besonders bevorzugt bei weniger als 15 Gew.-% und insbesondere bevorzugt nicht höher als 10 Gew.-%. In einer weiteren besonders bevorzugten Ausführungsform der Erfindung wird auf den Einsatz der Verbindungen (S1), (S2) und (S3) vollständig verzichtet.

Beispiele für solche Silane (S1) sind aminofunktionelle Silane, wie beispielsweise Aminopropyltrimethoxysilan, Cyclohexylaminomethyltrimethoxysilan, Phenylaminomethyltrimethoxysilan, Silane mit ungesättigten Funktionen, wie beispielsweise Vinyltrimethoxysilan, Methacrylatopropyltrimethoxysilan, Methacrylatomethyltrimethoxysilan, epoxyfunktionelle Silane, wie beispielsweise Glycidoxypropyltrimethoxysilan, mercaptofunktionelle Silane, wie beispielsweise Mercaptopropyltrimethoxysilan, Silane, die über eine maskierte NCO-Gruppe verfügen und bei thermischer Behandlung unter Abspaltung der Schutzgruppe eine NCO-Funktion freisetzen, und Silane, die bei der Reaktion mit einem Partikel (P1) Carbinol- oder Aminfunktionen freisetzen.

Beispiele für bevorzugte Silane (S1), die keine organofunktionellen Gruppen (F) tragen, sind Methyltrimethoxysilan, Dimethyldimethoxysilan, Trimethylmethoxysilan, Phenyltrimethoxysilan, Phenylmethyldimethoxysilan sowie die entsprechenden Ethoxy- und Chlorsilane.

Als Silazane (S2) bzw. Siloxane (S3) werden besonders bevorzugt Hexamethyldisilazan, Divinyltetramethyldisilazan bzw. Hexamethyldisiloxan, Divinyltetramethyldisiloxan oder lineare Siloxane, die seiten- oder endständig organofunktionelle Gruppen tragen, eingesetzt.

Als Partikel (P1) eignen sich aus Gründen der technischen Handhabbarkeit beispielsweise Oxide mit kovalentem Bindungsanteil in der Metall-Sauerstoff-Bindung, vorzugsweise Oxide der 3. Hauptgruppe, wie Bor-, Aluminium-, Gallium- oder Indiumoxide, der 4. Hauptgruppe, wie Siliciumdioxid, insbesondere pyrogenes Siliciumdioxid und kolloidales Siliciumdioxid, Germaniumdioxid, Zinnoxid, Zinndioxid, Bleioxid, Bleidioxid, oder Oxide der 4. Nebengruppe, wie Titanoxid, Zirkoniumoxid und Hafniumoxid. Weitere Beispiele sind Nickel-, Cobalt-, Eisen-, Mangan-, Chrom-, Cer- und Vanadiumoxide sowie Metalloxide mit einer Kern-Hülle-Struktur, bei denen der Kern beispielsweise aus Siliciumdioxid und die Hülle aus Ceroxid bestehen.
Zudem eignen sich Metalle mit oxidierter Oberfläche, Zeolithe (eine Auflistung geeigneter Zeolithe findet sich in: Atlas of Zeolite Framework Types, 5th edition, Ch. Baerlocher, W.M. Meier D.H. Olson, Amsterdam: Elsevier 2001), Silikate, Aluminate, Aluminophosphate, Titanate und Aluminiumschichtsilikate (z.B. Bentonite, Montmorillonite, Smektite, Hektorite).
Dabei besitzen die Partikel (P1) bevorzugt einen mittleren Durchmesser von ≤ 400 nm, besonders bevorzugt ≤ 200 nm. Der mittlere Durchmesser der Partikel (P1) wird als mittlerer hydrodynamischer Äquivalenzdurchmesser in Form des Z-Average durch Photonenkorrelationsspektroskopie oder mittels Transmissionselektronenmikroskopie (TEM) bestimmt.

In einer bevorzugten Ausführungsform der Erfindung kommen als Partikel (P1) Partikel mit Oberflächenfunktionen, die ausgewählt werden aus Metall-OH, Metall-0-Metall, Si-OH, Si-O-Si, Si-O-Metall, Si-Y, Metall-Y, Metall-OR³, Si-OR³ zum Einsatz,
wobei
- **Y**: ein Halogenatom,
- **R³**: einen gegebenenfalls substituierten aliphatischen oder aromatischen Kohlenwasserstoff mit 1-10 Kohlenstoffatomen bedeuten.

Dabei bedeutet **Y** bevorzugt ein Chloratom, **R³** bevorzugt eine Methyl- oder Ethylgruppe.

In einer bevorzugten Ausführungsform der Erfindung werden als Partikel (P1) kolloidale Silicium- oder Metalloxide eingesetzt, die im Allgemeinen als Dispersion der entsprechenden Oxidteilchen von Submikrongröße in einem wässrigen oder organischen Lösungsmittel vorliegen. Dabei können unter anderem die Oxide der Metalle Aluminium, Titan, Zirkonium, Tantal, Wolfram, Hafnium, Cer und Zinn oder die entsprechenden Mischoxide verwendet werden. Besonders bevorzugt sind Kieselsole. In der Regel handelt es sich bei den Kieselsolen vorzugsweise um 1-50 Gew.-%ige Lösungen, bevorzugt um 20-40 Gew.-%ige Lösungen. Typische Lösungsmittel sind dabei neben Wasser vor allem Alkohole, insbesondere Alkohole mit 1 bis 6 Kohlenstoffatomen, - häufig Isopropanol aber auch andere meist niedermolekulare Alkohole wie z.B. Methanol, Ethanol, n-Propanol, n-Butanol, Isobutanol und t-Butanol. Ebenso sind auch Organosole in polaren aprotischen Lösungsmitteln wie z.B. Methylethylketon oder aromatische Lösungsmittel wie z.B. Toluol verfügbar. Die mittlere Teilchengröße der Siliciumdioxidpartikel (P1) liegt im Allgemeinen bei vorzugsweise 1-200 nm, bevorzugt bei 5-50 nm, besonders bevorzugt bei 8-30 nm.
Beispiele für kommerziell erhältliche Kieselsole, die sich zur Herstellung der Partikel (P) eignen, sind Kieselsole der Produktserien LUDOX® (Grace Davison), Snowtex® (Nissan Chemical), Klebosol® (Clariant) und Levasil® (H.C. Starck), Kieselsole in organischen Lösungsmitteln wie z.B. IPA-ST (Nissan Chemical) oder solche Kieselsole, die sich nach dem Stöber-Verfahren herstellen lassen.

Ausgehend von den kolloidalen Silicium- oder Metalloxiden (P1) kann die Herstellung der Partikel (P) nach verschiedenen Verfahren erfolgen. Bevorzugt erfolgt sie jedoch durch Zugabe der Silane (S) bzw. deren Hydrolyse- oder Kondensationsprodukte - gegebenenfalls in einem Lösungsmittel oder Lösungsmittelgemisch und/oder in Mischungen mit anderen Silanen (S1), Silazanen (S2) und Siloxanen (S3) - zum Partikel (P1) bzw. dessen Lösung in einem wässrigen oder organischen Lösungsmittel. Die Reaktion erfolgt in der Regel bei Temperaturen von vorzugsweise 0-200 °C, bevorzugt bei 20-80 °C und besonders bevorzugt bei 20-60 °C. Die Reaktionszeiten liegen typischerweise bei vorzugsweise 5 Min bis 48 h, bevorzugt bei 1 bis 24 h. Wahlweise können auch noch saure, basische oder schwermetallhaltige Katalysatoren zugesetzt werden. Bevorzugt werden diese in Spuren (< 1000 ppm) einsetzt. Besonders bevorzugt wird jedoch auf den Zusatz von gesonderten Katalysatoren verzichtet.

Gegebenenfalls ist für die Umsetzung der Partikel (P1) mit den Silanen (S) die Zugabe von Wasser bevorzugt.

Da kolloidale Silicium- oder Metalloxide typischerweise in wässriger oder alkoholischer Dispersion vorliegen, kann es vorteilhaft sein, das bzw. die Lösungsmittel während oder nach der Herstellung der Partikel (P) gegen ein anderes Lösungsmittel bzw. gegen ein anderes Lösungsmittelgemisch auszutauschen. Dies kann beispielsweise durch destillatives Entfernen des ursprünglichen Lösungsmittels geschehen, wobei das neue Lösungsmittel bzw. Lösungsmittelgemisch in einem oder auch in mehreren Schritten vor, während oder auch erst nach der Destillation zugegeben werden kann. Geeignete Lösungsmittel können dabei beispielsweise Wasser, aromatische oder aliphatische Alkohole, wobei aliphatische Alkohole, insbesondere aliphatische Alkohole mit 1 bis 6 Kohlenstoffatomen (z.B. Methanol, Ethanol, n-Propanol, Isopropanol, n-Butanol, Isobutanol, t-Butanol, die verschiedenen Regioisomere des Pentanols und Hexanols) bevorzugt werden, Ester (z.B. Ethylacetat, Propylacetat, Butylacetat, Butyldiglycolacetat, Methoxypropylacetat), Ketone (z.B. Aceton, Metylethylketon), Ether (z.B. Diethylether, t-Butylmethylether, THF), aromatische Lösungsmittel (Toluol, die verschiedenen Regioisomere des Xylols aber auch Mischungen wie Solvent Naphta), Lactone (z.B. Butyrolacton etc.) oder Lactame (z.B. N-Methylpyrrolidon) darstellen. Dabei werden aprotische Lösungsmittel bzw. Lösungsmittelgemische, die ausschließlich oder aber zumindest teilweise aus aprotischen Lösungsmitteln bestehen, bevorzugt.

Die aus den Partikeln (P1) erhaltenen modifizierten Partikel (P) können durch gängige Verfahren wie beispielsweise durch Abdampfen der verwendeten Lösungsmittel oder durch Trocknung, beispielsweise im Sprühtrockner oder Dünnschichtverdampfer, durch Filtration oder durch Fällung als Pulver isoliert werden. Zusätzlich können in einer bevorzugten Verfahrensweise im Anschluss an die Herstellung der Partikel (P) Verfahren zur Desagglomerierung der Partikel eingesetzt werden, wie Stiftmühlen oder Vorrichtungen zur Mahlsichtung, wie Hammermühlen, Gegenstrommühlen, Perlmühlen, Kugelmühlen, Prallmühlen oder Vorrichtungen zur Mahlsichtung.

Die Partikel (P) besitzen die Eigenschaft, dass sie sich nach Isolierung als Pulver in wässrigen oder organischen Lösungsmitteln oder aber in Lösungsmittelgemischen dispergieren lassen. Dabei entspricht der mittlere Durchmesser der Partikel (P) nach der Dispergierung mit einer maximalen Größe von 200 nm dem 0,5- bis 20-fachen, bevorzugt dem 0,5- bis 5-fachen, besonders bevorzugt dem 0,5 bis 2-fachen des mittleren Durchmessers der Partikel vor Isolierung als Pulver, wobei der mittlere Durchmesser der Partikel (P) vor der Isolierung als Pulver als hydrodynamischer Äquivalenzdurchmesser in Form des Z-Average durch Photonenkorrelationsspektroskopie bestimmt wird.

Dabei war erstaunlich und für den Fachmann in keiner Weise vorherzusagen, dass sich die Partikel (P), die sich unter Verwendung des Silans (S) herstellen lassen, nach ihrer Herstellung durch Entfernen des Lösungsmittels als Feststoff isolieren lassen und anschließend eine hervorragende Dispergierbarkeit in flüssigen Medien, wie wässrigen und organischen Lösungsmitteln aufweisen.
Wird bei der Herstellung der Partikel (P) auf das Silan (S) verzichtet oder wird das Silan (S) in zu geringen Mengen eingesetzt, so lassen sich die Partikel (P) nach Isolierung als Feststoff in flüssigen Medien nicht redispergieren oder aber die mittlere Partikelgröße der Partikel (P) übersteigt vor der Isolierung und/oder nach der Dispergierung den mittleren Durchmesser von 200 nm.
Zudem liegt der Erfindung die Erkenntnis zugrunde, dass sich überraschend bereits durch eine partielle Modifizierung der Feststoffoberfläche mit Gruppen der allgemeinen Formel [1] über einen weiten pH-Bereich eine negative Oberflächenladung der Partikel erhalten lässt, die u.a. in einer drastischen Steigerung der Lagerstabilität wässriger Dispersionen der Partikel (P), d.h. einer geringeren Neigung zur Agglomeration bzw. Vergelen, resultiert.

Durch die Möglichkeit, die Partikel (P) als Feststoff, insbesondere als Pulver zu isolieren, wird beispielsweise die Herstellung von Kompositmaterialien enthaltend die Partikel (P) gegenüber den Verfahren des Standes der Technik deutlich erleichtert. Zudem ist die über einen weiten pH-Bereich negative Ladung der Partikel vorteilhaft bzgl. der Lagerstabilität wässriger Dispersionen der Partikel (P).

Ein weiterer Gegenstand der Erfindung sind Dispersionen (D) der Partikel (P) sowie Verfahren zur Herstellung der Dispersionen.

In einer bevorzugten Ausführungsform der Erfindung werden zur Herstellung der Dispersionen (D) pulverförmige Partikel (P) in wässrige oder organische Lösungsmittel oder aber in Lösungsmittelgemische gegeben und durch spontane Benetzung oder durch Schütteln, wie mit einem Taumelmischer, oder einen High-Speed-Mixer oder durch Rühren, wie durch einen Balkenrührer oder Dissolver, eingearbeitet. Bei geringen Partikelkonzentrationen (höchstens 10 Gew.-%) reicht im Allgemeinen einfaches Rühren zur Einarbeitung und Dispergierung. Bevorzugt ist das Dispergieren der pulverförmigen Partikel (P) in die Flüssigkeit bei hohem Schergefälle. Hierfür sind vorzugsweise schnellaufende Rührer, schnellaufende Dissolver, z.B. mit Umlaufgeschwindigkeiten von 1-50 m/s, schnellaufende Rotor-Stator Systeme, Sonolatoren, Scherspalte, Düsen, Kugelmühlen geeignet.

Insbesondere geeignet ist zur Dispergierung der pulverförmigen Partikel (P) der Einsatz von Ultraschall im Bereich von 5 Hz bis 500 kHz, bevorzugt 10 kHz bis 100 kHz, ganz besonders bevorzugt 15 kHz bis 50 kHz; die Ultraschalldispergierung kann kontinuierlich oder diskontinuierlich erfolgen. Dies kann durch einzelne Ultraschallgeber, wie Ultraschallspitzen geschehen, oder in Durchflusssystemen, die gegebenenfalls durch eine Rohrleitung oder Rohrwand abgetrennt sind, einen oder mehrere Ultraschallgeber enthalten.

Bei der Herstellung wässriger Dispersionen (D) aus den pulverförmigen Partikeln (P) kann es vorteilhaft sein, - in Abhängigkeit von der Art der eingesetzten Partikel (P) - vorzugsweise Wasser unterschiedlichen pH-Werts einzusetzen. Bevorzugt wird die Dispergierung im basischen Milieu durchgeführt.

In einer weiteren Ausführungsform der Erfindung werden Dispersionen (D) hergestellt, indem die Partikel (P1) mit den Silanen (S) in dem gewünschten Dispersionsmittel umgesetzt werden, wobei in einem Isolierungsschritt, die Partikel (P) erhaltbar sind.

Die Dispersionen (D) weisen vorzugsweise einen Gehalt von 1-50 Gew.-%, bevorzugt 3-30 Gew.-%, besonders bevorzugt 5-20 Gew.-% der Partikel (P) auf.

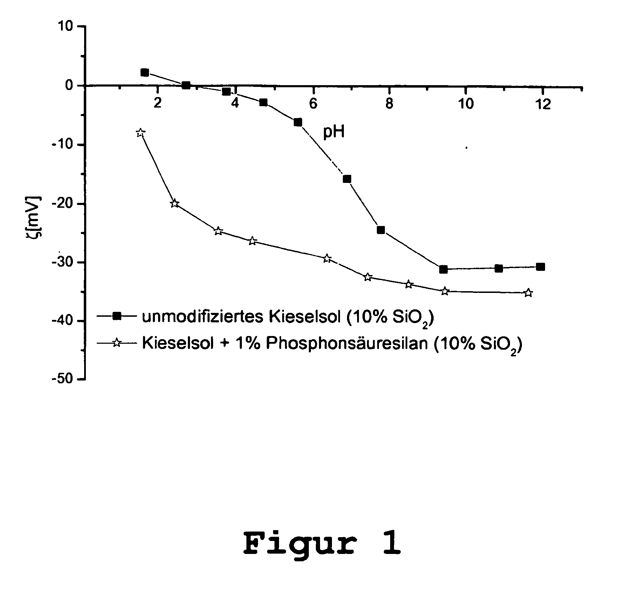

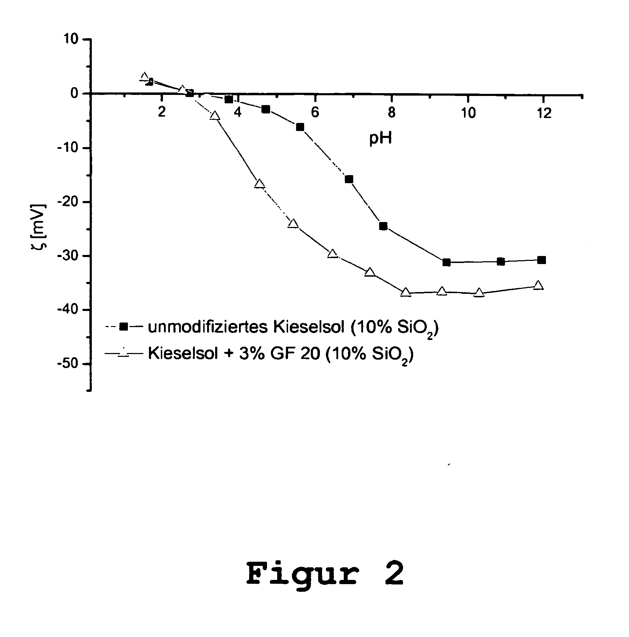

Die erfindungsgemäßen Partikel (P) in Form der Dispersionen (D) sind ferner überraschend dadurch gekennzeichnet, dass sie über einen weiten pH-Bereich ein negatives ZETA-Potential aufweisen. Im Allgemeinen wird für den isoelektrischen Punkt (IEP) von Kieselsäuren, d.h. den pH-Wert, bei dem das ZETA-Potential einen Wert von 0 aufweist, ein pH-Wert von ca. 2 gemessen, wie z.B. in M. Kosmulski, J. Colloid Interface Sci. 2002, 253, 77-87 angegeben. Bei pH-Werten in Nähe des IEPs wird der Betrag des ZETA-Potentials typischerweise sehr klein, d.h. die Partikel erfahren nur eine sehr geringe Stabilisierung durch die elektrostatische Abstoßung. Die erfindungsgemäßen Partikel (P) weisen in wässriger Dispersion (D) dagegen in Nähe des IEP ein im Betrag deutlich größeres ZETA-Potential auf als die entsprechenden unmodifizierten Kieselsole (s. Figur 2) oder aber besitzen den IEP bei einem deutlich niedrigeren pH-Wert (s. Figur 1). In beiden Fällen sind die Dispersionen (D) deutlich stabiler als die entsprechenden unmodifizierten Dispersionen.

Die pulverförmigen Partikel (P) weisen überraschend in polaren Systemen, wie lösemittelfreien Polymeren und Harzen, oder Lösungen, Suspensionen, Emulsionen und Dispersionen von organischen Harzen, in wässrigen Systemen oder in organischen Lösemitteln (z.B.: Polyester, Vinylester, Epoxide, Polyurethane, Alkydharze, u.a.) eine hohe Verdickungswirkung auf und sind damit als rheologische Additive in diesen Systemen geeignet. Die Partikel (P) liefern als rheologisches Additiv in diesen Systemen die erforderte notwendige Viskosität, Strukturviskosität, Thixotropie und eine für das Standvermögen an senkrechten Flächen ausreichende Fließgrenze.

Im weiteren verhindern die pulverförmigen Partikel (P) in pulverförmigen Systemen Verbackungen oder Verklumpungen, z.B. unter Feuchteeinfluss, neigen aber auch nicht zur Reagglomeration, und damit zur unerwünschten Separierung, sondern erhalten Pulver fließfähig und ermöglichen somit belastungsstabile und lagerstabile Mischungen. Dies gilt im Besonderen für den Einsatz in nichtmagnetischen und magnetischen Tonern und Entwicklern und Ladungssteuerungshilfsmitteln, z.B. in kontaktlosen oder elektrofotografischen Druck-/Reproduktionsverfahren die 1- und 2-Komponenten Systeme sein können. Dies gilt auch in pulverförmigen Harzen, die als Anstrichsysteme verwendet werden.

Ein weiterer Gegenstand der Erfindung sind Toner, Entwickler, Ladungssteuerungshilfsmittel, Füllstoffe in Kompositmaterialien, Papierbeschichtungen, Pickering-Emulsionen, Schleifkorn enthaltende Suspensionen zum Polieren von Halbleiterbauteilen, Adsorbentien, Ionenaustauscher, die die erfindungsgemäßen Partikel enthalten.

Die erfindungsgemäßen pulverförmigen Partikel (P) werden in Tonern, Entwicklern und Ladungssteuerungshilfsmitteln verwendet. Derartige Entwickler und Toner sind z.B. magnetische 1-Komponenten und 2-Komponenten Toner, aber auch nichtmagnetische Toner. Diese Toner können als Hauptbestandteil Harze, wie Styrol- und Acrylharze aufweisen, und bevorzugt zu Partikelverteilungen von 1-100 µm vermahlen sein, oder können Harze sein, die in Polymerisationsverfahren in Dispersion oder Emulsion oder Lösung oder in Masse zu Partikelverteilungen von bevorzugt 1-100 µm hergestellt wurden. Silicium- und Metalloxid wird bevorzugt eingesetzt zur Verbesserung und Steuerung des Pulver-Fließverhaltens, und/oder zur Regulierung und Steuerung der triboelektrischen Ladungseigenschaften des Toners oder Entwicklers. Derartige Toner und Entwickler können bei elektrophotografischen Print- und Druckverfahren eingesetzt werden, auch sind sie einsetzbar bei direkten Bildübertragungsverfahren.

Besonders bevorzugt dienen die pulverförmigen Partikel (P) als Füllstoffe in Kompositmaterialien, u.a. als flammhemmende Komponente, und Lacken, bevorzugt kratzfesten Klar- oder Decklacken, insbesondere in der Fahrzeugindustrie als OEM- und Reparaturlacke.

Die pulverförmigen Partikel (P) bzw. die Dispersionen (D) sind im Weiteren zur Herstellung von Papierbeschichtungen geeignet, wie sie z.B. für Hochglanzphotopapiere eingesetzt werden.

Die pulverförmigen Partikel (P) bzw. die Dispersionen (D) können ferner zur Herstellung partikelstabilisierter Emulsionen, so genannter Pickering-Emulsionen, eingesetzt werden.

Eine weitere Anwendungsmöglichkeit der Partikel (P) bzw. der Dispersionen (D) liegt in ihrer Verwendung als Schleifkorn oder Poliermittel oder formulierten Poliermittelsuspensionen, die in Polierprozessen, zum Beispiel bei der Herstellung von optischen Bauteilen, von elektrooptischen Bauteilen oder von Halbleiterelementen, wie zum Beispiel bei der Herstellung von Prozessoren, Logikbauteilen oder Speichern, zum Beispiel beim Prozess des chemischen und mechanischen Polierens und Planarisieren, eingesetzt werden, oder als Adsorbens bzw. Ionenaustauscher.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20 °C.

### Beispiel 1: Synthese Phosphonat-funktioneller Partikel aus einem wässrigen Kieselsol.

Zu einem verdünnten wässrigen Kieselsol, hergestellt durch Zugabe von 5,00 g Wasser zu 6,25 g eines wässrigen Kieselsols (LUDOX® AS 40 der Firma GRACE DAVISON, 24 nm, 40 Gew.-%), werden 0,60 g einer wässrigen Lösung des Natrium-[3-(Trihydroxysilyl)propyl methylphosphonats] ((HO)₃Si(CH₂)₃-O-P(O)(CH₃)(ONa), CAS 84962-98-1, Aldrich No. 435716, 42% in Wasser) getropft und das Gemisch für 5 h auf 60 °C erwärmt. Nach Abdestillieren des Lösungsmittels erhält man 2,61 g eines farblosen Pulvers, das durch Einrühren in Wasser dispergiert werden kann. Die mittlere Partikelgröße des Kieselsols in Wasser (mit verdünntem Ammoniak auf pH = 11 eingestellt), bestimmt als mittlerer hydrodynamischer Äquivalenzdurchmesser in Form des Z-Average mittels dynamischer Lichtstreuung (Zetasizer Nano der Firma MALVERN), betrug 41 nm.

### Beispiel 2: Synthese Carboxylat-funktioneller Partikel aus einem Organosol.

Zu 15,0 g eines Kieselsols in Isopropanol (IPA-ST der Firma NISSAN CHEMICAL, 12 nm, 30 Gew.-%), werden 0,46 g 3-(Triethoxysilyl)propylbernsteinsäureanhydrid (Silan GF20, WACKER CHEMIE AG, München) getropft und das Gemisch für 6 h auf 60 °C erwärmt. Nach Abdestillieren des Lösungsmittels erhält man 4,98 g eines farblosen Pulvers, das durch Einrühren in verdünnten Ammoniak (pH = 10) dispergiert werden kann. Die mittlere Partikelgröße des Kieselsols in verdünntem Ammoniak (pH = 10), bestimmt als mittlerer hydrodynamischer Äquivalenzdurchmesser in Form des Z-Average mittels dynamischer Lichtstreuung (Zetasizer Nano der Firma MALVERN), betrug 22 nm.

### Beispiel 3: Herstellung einer wässrigen Dispersion Phosphonatfunktioneller Partikel

Zu 100 g eines nach dem Stöber-Verfahren aus Tetraethoxysilan hergestellten Kieselsols (14,4 Gew.-% SiO₂, 30 nm, Ammoniakstabilisiert, pH = 10) werden 0,34 g einer wässrigen Lösung des Natrium-[3-(Trihydroxysilyl)propyl methylphosphonats) ((HO)₃Si(CH₂)₃-O-P(O)(CH₃)(ONa), CAS 84962-98-1, Aldrich No. 435716, 42% in Wasser) getropft und das Gemisch für 2 h zum Rückfluss erwärmt. Man erhält ein Kieselsol, welches im sauren, neutralen und basischen Milieu (pH = 2-12) eine höhere Stabilität aufweist als das entsprechende unmodifizierte Kieselsol. Figur 1 zeigt das Zetapotential in Abhängigkeit vom pH-Wert. Die mittlere Partikelgröße des Kieselsols in Wasser bestimmt als mittlerer hydrodynamischer Äquivalenzdurchmesser in Form des Z-Average mittels dynamischer Lichtstreuung (Zetasizer Nano der Firma MALVERN), betrug nach der Silanmodifizierung 30 nm. In Figur 1 wird das Zetapotential (ζ) in Abhängigkeit vom pH-Wert gezeigt. Titration mit 0,5 M KOH bzw. 1,0 M HNO₃ (10 Gew.-% SiO₂; Ionenhintergrund: 0,01 M KC1). Das Silan-modifizierte Kieselsol zeigt im pH-Bereich 2-12 ein deutlich negativeres Zetapotential als das unmodifizierte Kieselsol.

### Beispiel 4: Herstellung einer wässrigen Dispersion Carboxylatfunktioneller Partikel

Zu 100 g eines nach dem Stöber-Verfahren aus Tetraethoxysilan hergestellten Kieselsols (14,4 Gew.-% SiO₂, 30 nm, Ammoniakstabilisiert, pH = 10) werden 0,43 g 3-(Triethoxysilyl)propylbernsteinsäureanhydrid (GF20, WACKER CHEMIE AG, München) getropft und das Gemisch für 2 h zum Rückfluss erwärmt. Man erhält ein Kieselsol, welches im sauren, neutralen und basischen Milieu (pH = 3,5-12) eine höhere Stabilität aufweist als das entsprechende unmodifizierte Kieselsol. Figur 2 zeigt das Zetapotential in Abhängigkeit vom pH-Wert. Die mittlere Partikelgröße des Kieselsols in Wasser bestimmt als mittlerer hydrodynamischer Äquivalenzdurchmesser in Form des Z-Average mittels dynamischer Lichtstreuung (Zetasizer Nano der Firma MALVERN), betrug nach der Silanmodifizierung 30 nm.

In Figur 2 wird das Zetapotential (ζ) in Abhängigkeit vom pH-Wert gezeigt. Titration mit 0,5 M KOH bzw. 1,0 M HNO₃ (10 Gew.-% SiO₂; Ionenhintergrund: 0,01 M KC1). Das Silan-modifizierte Kieselsol zeigt im pH-Bereich 3,5-12 ein deutlich negativeres Zetapotential als das unmodifizierte Kieselsol.

## Patentansprüche

1. Redispergierbare pulverförmige Partikel (P), die auf der Oberfläche Gruppen der allgemeinen Formel [1],
-O₁₊ₙ-SiR¹₂₋ₙ-B [1],
aufweisen, wobei der mittlere Durchmesser der Partikel (P) nach der Dispergierung in Wasser mit einem pH-Bereich von 1 bis 12 kleiner oder gleich 200 nm ist und als mittlerer hydrodynamischer Äquivalenzdurchmesser in Form des Z-Average durch Photonenkorrelationsspektroskopie bestimmt wird,
wobei
**R¹** einen gegebenenfalls substituierten aliphatischen oder aromatischen Kohlenwasserstoffrest mit 1-12 Kohlenstoffatomen,
**B** einen gegebenenfalls substituierten aliphatischen oder aromatischen Kohlenwasserstoffrest enthaltend mindestens eine organische Säurefunktion bzw. deren Salze bedeutet und
**n** die Werte 0, 1 oder 2 annimmt und die pulverförmigen Partikel (P) eine Restfeuchte von kleiner 10 Gew.-% aufweist.

2. Partikel nach Anspruch 1, **dadurch gekennzeichnet, dass** B einen gegebenenfalls substituierten Kohlenwasserstoffrest aufweist, der mindestens eine Carbonsäure- [-C(O)OH], Phosphonsäure- [-P(O)(OH)(OR²), -O-P(O)(R²) (OR²)] oder Sulfonsäurefunktion [-S(O)₂(OH)] bzw. deren Salze aufweist, wobei R² einen gegebenenfalls substituierten aliphatischen oder aromatischen Kohlenwasserstoffrest bedeutet.

3. Partikel nach Anspruch 1 oder 2, **dadurch gekennzeichnet, dass** das Partikel auf einem kolloidalen Silicium- oder Metalloxid basiert.

4. Partikel nach Anspruch 3 **dadurch gekennzeichnet, dass** das Partikel auf einem Kieselsol basiert.

5. Partikel nach einem oder mehreren der Ansprüche 1 bis 4, **dadurch gekennzeichnet, dass** der mittlere Durchmesser der Partikel (P) - gemessen als mittlerer hydrodynamischer Äquivalenzdurchmesser in Form des Z-Average durch Photonenkorrelationsspektroskopie - dispergiert in einem flüssigen Medium höchstens 200 nm beträgt.

6. Verfahren zur Herstellung von redispergierbaren pulverförmigen Partikel, die auf der Oberfläche Gruppen der allgemeinen Formel [1],
-O₁₊ₙ-SiR¹₂₋ₙ-B [1],
aufweisen, und in einem zweistufigen Verfahren herstellbar sind, wobei
(a) in einer ersten Verfahrensstufe Partikel (P1) als kolloidale Silicium- oder Metalloxide eingesetzt werden, die als Dispersion der entsprechenden Oxidteilchen von Submikrongröi3e in einem wässrigen Lösungsmittel vorliegen, mit mindestens einem Silan (S) der allgemeinen Formel [2] oder [3],
X₁₊ₙSiR¹₂₋ₙ-B [2],
X₁₊ₙSiR¹₂₋ₙ-C [3],
bzw. der daraus abgeleiteten Hydrolyse- und Kondensationsprodukte oder einer Mischung bestehend aus dem Silan (S) und den daraus abgeleiteten Hydrolyse- und Kondensationsprodukten umgesetzt werden, wobei die Gruppe C der allgemeinen Formel [3] im Zuge der Herstellung der Partikel (P) in die Gruppe B überführt wird und
(b) in einer zweiten Verfahrensstufe die Partikel (P) als Pulver isoliert werden, wobei der mittlere Durchmesser der Partikel (P) nach der Dispergierung in Wasser im pH-Bereich von 1 bis 12 mit einer maximalen Größe von 200 nm dem 0,5-bis 20-fachen des mittleren Durchmessers der Partikel vor der Isolierung als Pulver entspricht und der mittlere Durchmesser der Partikel (P) als mittlerer hydrodynamischer Äquivalenzdurchmesser in Form des Z-Average durch Photonenkorrelationsspektroskopie bestimmt wird,
wobei
**X** ein Halogen, eine Hydroxy- oder Alkoxygruppe, ein Carboxylat, ein Enolat oder eine Siloxy-Gruppe -O-Si≡ darstellt,
**R¹** einen gegebenenfalls substituierten aliphatischen oder aromatischen Kohlenwasserstoffrest mit 1-12 Kohlenstoffatomen,
**B** einen gegebenenfalls substituierten aliphatischen oder aromatischen Kohlenwasserstoffrest enthaltend mindestens eine organische Säurefunktion bzw. deren Salze bedeuten,
**C** einen funktionellen Kohlenwasserstoffrest darstellt, der durch Hydrolyse in die Gruppe **B** überführt werden kann, und
**n** die Werte 0, 1 oder 2 bedeuten.

7. Verfahren zur Herstellung von Partikeln (P) nach Anspruch 6, **dadurch gekennzeichnet, dass** das Silan (S) eine Struktur der allgemeinen Formel [4]-[8], 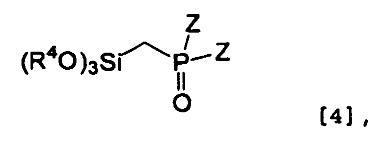 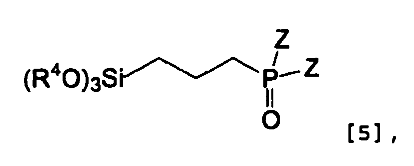 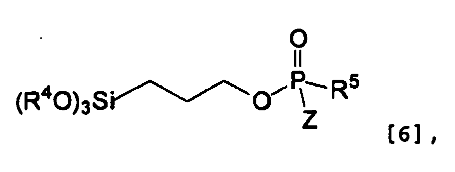 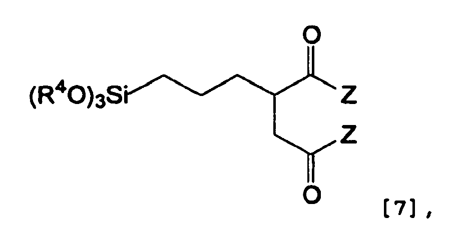 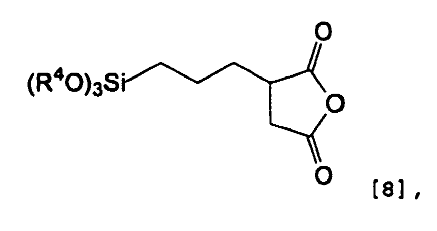 aufweist, wobei
**R⁴** Wasserstoff, einen gegebenenfalls substituierten aliphatischen oder aromatischen Kohlenwasserstoff mit 1-6 Kohlenstoffatomen,
**R⁵** einen gegebenenfalls substituierten aliphatischen oder aromatischen Kohlenwasserstoff mit 1-6 Kohlenstoffatomen,
**R⁶** einen gegebenenfalls substituierten aliphatischen oder aromatischen Kohlenwasserstoff mit 1-6 Kohlenstoffatomen und
**Z** OH, O**R⁶**, ein Halogenatom oder einen Rest OW und
**W** ein Metallkation oder ein Ammoniumion bedeutet.

8. Verfahren zur Herstellung von Partikeln (P) nach Anspruch 6 oder 7, **dadurch gekennzeichnet, dass** als Ausgangspartikel kolloidale Silicium- oder Metalloxid-Partikel verwendet werden.

9. Verfahren zur Herstellung von Partikeln (P) nach Anspruch 8, **dadurch gekennzeichnet, dass** als Ausgangspartikel ein Kieselsol verwendet wird.

10. Verfahren zur Herstellung einer Dispersion, die Partikel nach einem der Ansprüche 1 bis 6 oder Partikel hergestellt nach einem der Ansprüche 7 bis 9 enthält, **dadurch gekennzeichnet, dass** die Partikel (P) hergestellt werden, indem die Partikel (P1) mit den Silanen (S) in dem gewünschten Dispersionsmittel umgesetzt werden.

11. Dispersion, **dadurch gekennzeichnet, dass** die Dispersion Partikel nach einem der Ansprüche 1 bis 6 oder Partikel hergestellt nach einem der Ansprüche 7 bis 9 enthält.

12. Toner, Entwickler, Ladungssteuerungshilfsmittel, Füllstoffe in Kompositmaterialien, Papierbeschichtungen, Pickering-Emulsionen, Schleifkorn enthaltende Suspension zum Polieren von Halbleiterbauteilen, Adsorbens, Ionenaustauscher, **dadurch gekennzeichnet, dass** sie Partikel nach einem der Ansprüche 1 bis 6 oder Partikel hergestellt nach einem der Ansprüche 7 bis 9 enthalten.

## Claims

1. Redispersible pulverulent particles (P) which on the surface have groups of the general formula [1],
-O₁₊ₙ-SiR¹₂₋ₙ-B [1],
where the average diameter of the particles (P) following dispersion in water with a pH range of 1 to 12 is less than or equal to 200 nm and is determined as the average hydrodynamic equivalent diameter in the form of the Z-average by photon correlation spectroscopy,
and where
**R¹** is an optionally substituted aliphatic or aromatic hydrocarbon radical having 1-12 carbon atoms,
**B** is an optionally substituted aliphatic or aromatic hydrocarbon radical comprising at least one organic acid function or salts thereof, and
**n** adopts the values 0, 1 or 2 and the pulverulent particles (P) have a residual moisture content of less than 10% by weight

2. Particles according to Claim 1, **characterized in that B** contains an optionally substituted hydrocarbon radical which contains at least one carboxylic acid [-C(O)OH], phosphonic acid [-P(O)(OH)(OR²), -O-P(O)(R²) (OR²)] or sulfonic acid [-S(O)₂(OH)] function or salts thereof,
where **R²** is an optionally substituted aliphatic or aromatic hydrocarbon radical.

3. Particles according to Claim 1 or 2, **characterized in that** the particle is based on a colloidal silicon oxide or metal oxide.

4. Particles according to Claim 3, **characterized in that** the particle is based on a silica sol.

5. Particles according to one or more of Claims 1 to 4, **characterized in that** the average diameter of the particles (P) - measured as the average hydrodynamic equivalent diameter in the form of the Z-average by photon correlation spectroscopy - in dispersion in a liquid medium is not more than 200 nm.

6. Process for preparing redispersible pulverulent particles which on the surface have groups of the general formula [1],
-O₁₊ₙ-SiR¹₂₋ₙ-B [1],
and are preparable in a two-stage process, where
(a) in a first process stage, particles (P1) are used as colloidal silicon oxides or metal oxides which take the form of a dispersion of the corresponding oxide particles of submicron size in an aqueous solvent, are reacted with at least one silane (S) of the general formula [2] or [3],
X₁₊ₙSiR¹₂₋ₙ-B [2],
X₁₊ₙSiR¹₂₋ₙ-C [3],
and/or the hydrolysis and condensation products derived therefrom, or with a mixture consisting of the silane (S) and the hydrolysis and condensation products derived therefrom, the group C of the general formula [3] being converted, in the course of the preparation of the particles (P), into the group B, and
(b) in a second process stage, the particles (P) are isolated as powder, the average diameter of the particles (P) after dispersion in water in the pH range from 1 to 12, with a maximum size of 200 nm, corresponding to 0.5 to 20 times the average diameter of the particles before isolation as a powder, and the average diameter of the particles (P) being determined as the average hydrodynamic equivalent diameter in the form of the Z-average by photon correlation spectroscopy,
where
**X** is a halogen, a hydroxyl or alkoxy group, a carboxylate, an enolate or a siloxy group -O-Si≡,
**R¹** is an optionally substituted aliphatic or aromatic hydrocarbon radical having 1-12 carbon atoms,
**B** is an optionally substituted aliphatic or aromatic hydrocarbon radical comprising at least one organic acid function or salts thereof,
**C** is a functional hydrocarbon radical which can be converted by hydrolysis into the group **B,** and
**n** is the values 0, 1 or 2.

7. Process for preparing particles (P) according to Claim 6, **characterized in that** the silane (S) has a structure of the general formula [4]-[8], 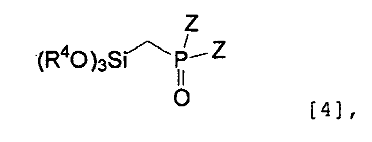 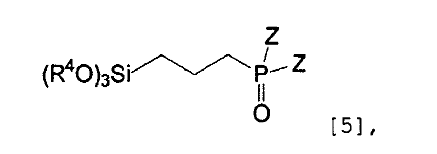 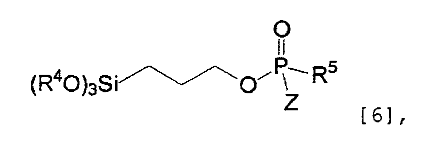 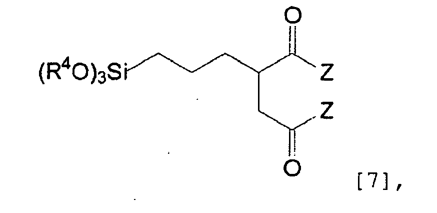 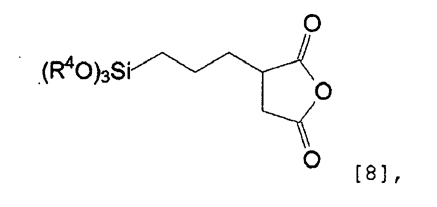 where
**R⁴** is hydrogen or an optionally substituted aliphatic or aromatic hydrocarbon having 1-6 carbon atoms,
**R⁵** is an optionally substituted aliphatic or aromatic hydrocarbon having 1-6 carbon atoms,
**R⁶** is an optionally substituted aliphatic or aromatic hydrocarbon having 1-6 carbon atoms, and
**Z** is OH, O**R⁶**, a halogen atom or a radical O**W**, and
**W** is a metal cation or an ammonium ion.

8. Process for preparing particles (P) according to Claim 6 or 7, **characterized in that** starting particles used are colloidal silicon oxide or metal oxide particles.

9. Process for preparing particles (P) according to Claim 8, **characterized in that** a silica sol is used as starting particle.

10. Process for preparing a dispersion which comprises particles according to any of Claims 1 to 6 or particles prepared according to any of Claims 7 to 9, **characterized in that** the particles (P) are prepared by reacting the particles (P1) with the silanes (S) in the desired dispersion medium.

11. Dispersion **characterized in that** the dispersion comprises particles according to any of Claims 1 to 6 or particles prepared according to any of Claims 7 to 9.

12. Toners, developers, charge control agents, fillers in composite materials, paper coatings, Pickering emulsions, particulate abrasive suspension for polishing semiconductor components, adsorbent, ion exchangers, **characterized in that** they comprise particles according to any of Claims 1 to 6 or particles prepared according to any of Claims 7 to 9.

## Revendications

1. Particules pulvérulentes redispersibles (P), qui comprennent sur la surface des groupes de formule générale [1]
-O₁₊ₙ-SiR¹₂₋ₙ-B [1]
le diamètre moyen des particules (P) après la dispersion dans de l'eau à un pH de 1 à 12 étant inférieur ou égal à 200 nm et étant déterminé en tant que diamètre équivalent hydrodynamique moyen sous la forme de la moyenne Z par spectroscopie à corrélation de photons,
R¹ signifiant un radical hydrocarboné aliphatique ou aromatique éventuellement substitué ayant de 1 à 12 atomes de carbone,
B signifiant un radical hydrocarboné aliphatique ou aromatique éventuellement substitué contenant au moins une fonction acide organique ou ses sels et
n prenant la valeur 0, 1 ou 2,
et les particules pulvérulentes (P) présentant une humidité résiduelle inférieure à 10 % en poids.

2. Particules selon la revendication 1, **caractérisées en ce que** B comprend un radical hydrocarboné éventuellement substitué qui comprend au moins une fonction acide carboxylique [-C(O)OH], acide phosphonique [-P(O)(OH)(OR²) , -O-P(O)(R²) (OR²)] ou acide sulfonique [-S(O)₂OH] ou ses sels, R² signifiant un radical hydrocarboné aliphatique ou aromatique éventuellement substitué.

3. Particules selon la revendication 1 ou 2, **caractérisées en ce que** la particule est à base d'un oxyde de silicium ou de métal colloïdal.

4. Particules selon la revendication 3, **caractérisées en ce que** la particule est à base d'un sol de silice.

5. Particules selon une ou plusieurs des revendications 1 à 4, **caractérisées en ce que** le diamètre moyen des particules (P), mesuré en tant que diamètre équivalent hydrodynamique moyen sous la forme de la moyenne Z par spectroscopie à corrélation de photons, dispersées dans un milieu liquide, est d'au plus 200 nm.

6. Procédé de fabrication de particules pulvérulentes redispersibles qui comprennent sur la surface des groupes de formule générale [1]
-O₁₊ₙ-SiR¹₂₋ₙ-B [1]
et qui peuvent être fabriquées par un procédé à deux étapes, selon lequel
(a) lors d'une première étape de procédé, des particules (P1) sont utilisées en tant qu'oxydes de silicium ou de métal colloïdaux, qui se présentent sous la forme d'une dispersion des particules d'oxyde correspondantes d'une taille submicronique dans un solvant aqueux, sont mises en réaction avec au moins un silane (S) de formule générale [2] ou [3]
X₁₊ₙSiR¹₂₋ₙ-B [2]
X₁₊ₙSiR¹₂₋ₙ-C [3]
ou les produits d'hydrolyse et de condensation en dérivant ou un mélange constitué du silane (S) et des produits d'hydrolyse et de condensation en dérivant, le groupe C de la formule générale [3] étant transformé en le groupe B au cours de la fabrication des particules (P), et
(b) lors d'une seconde étape de procédé, les particules (P) sont isolées sous la forme d'une poudre, le diamètre moyen des particules (P) après la dispersion dans de l'eau à un pH de 1 à 12 correspondant, avec une taille maximale de 200 nm, à 0,5 à 20 fois le diamètre moyen des particules avant l'isolement sous forme de poudre, et le diamètre moyen des particules (P) étant déterminé en tant que diamètre équivalent hydrodynamique moyen sous la forme de la moyenne Z par spectroscopie à corrélation de photons,
X représentant un halogène, un groupe hydroxy ou alcoxy, un carboxylate, un énolate ou un groupe siloxy -O-Si≡,
R¹ signifiant un radical hydrocarboné aliphatique ou aromatique éventuellement substitué de 1 à 12 atomes de carbone,
B signifiant un radical hydrocarboné aliphatique ou aromatique éventuellement substitué contenant au moins une fonction acide organique ou ses sels,
C représentant un radical hydrocarboné fonctionnel qui peut être transformé par hydrolyse en le groupe B,
et
n signifiant la valeur 0, 1 ou 2.

7. Procédé de fabrication de particules (P) selon la revendication 6, **caractérisé en ce que** le silane (S) présente une structure de formules générales [4] à [8] 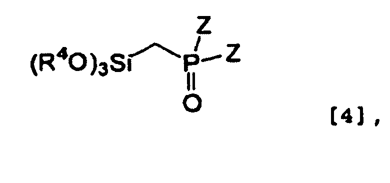 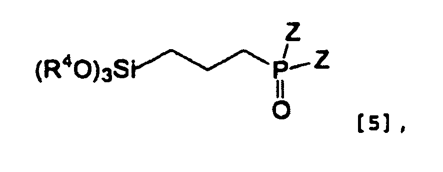 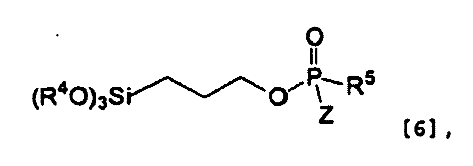 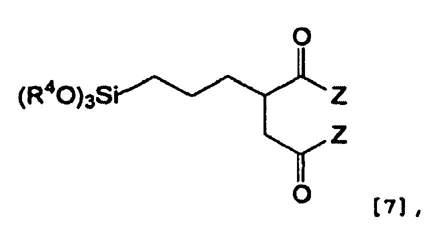 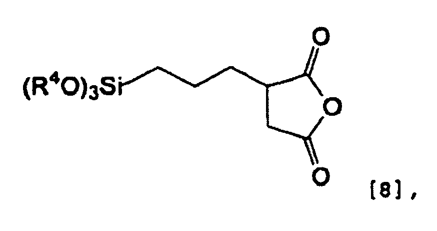 dans lesquelles
R⁴ signifie l'hydrogène, un hydrocarbure aliphatique ou aromatique éventuellement substitué ayant de 1 à 6 atomes de carbone,
R⁵ signifie un hydrocarbure aliphatique ou aromatique éventuellement substitué ayant de 1 à 6 atomes de carbone,
R⁶ signifie un hydrocarbure aliphatique ou aromatique éventuellement substitué ayant de 1 à 6 atomes de carbone, et
Z signifie OH, OR⁶, un atome d'halogène ou un radical OW, et
W signifie un cation métallique ou un ion ammonium.

8. Procédé de fabrication de particules (P) selon la revendication 6 ou 7, **caractérisé en ce que** des particules d'oxyde de silicium ou de métal colloïdales sont utilisées en tant que particules de départ.

9. Procédé de fabrication de particules (P) selon la revendication 8, **caractérisé en ce qu'**un sol de silice est utilisé en tant que particules de départ.

10. Procédé de fabrication d'une dispersion qui contient des particules selon l'une quelconque des revendications 1 à 6 ou des particules fabriquées selon l'une quelconque des revendications 7 à 9, **caractérisé en ce que** les particules (P) sont fabriquées par mise en réaction des particules (P1) avec les silanes (S) dans le milieu de dispersion souhaité.

11. Dispersion, **caractérisée en ce que** la dispersion contient des particules selon l'une quelconque des revendications 1 à 6 ou des particules fabriquées selon l'une quelconque des revendications 7 à 9.

12. Toner, révélateur, adjuvant de régulation des charges, charges dans des matériaux composites, revêtements de papier, émulsions de Pickering, suspensions contenant des particules abrasives pour le polissage d'éléments semi-conducteurs, adsorbants, échangeurs d'ions, **caractérisés en ce qu'**ils contiennent des particules selon l'une quelconque des revendications 1 à 6 ou des particules fabriquées selon l'une quelconque des revendications 7 à 9.
